# EUROPEAN PATENT SPECIFICATION

(11) **EP 0 731 889 B1**
(45) Date of publication and mention of the grant of the patent: **24.09.1997**
(21) Application number: 95903028.9
(22) Date of filing: 02.12.1994
(51) Int. Cl.: F16L 3/12, F16L 3/18

(54) **PIPE CLIP**
ROHRSCHELLE
PINCE DE MONTAGE POUR TUYAUX

(30) Priority: 02.12.1993 NL 9302098
(43) Date of publication of application: 18.09.1996
(73) Proprietor: J. van Walraven B.V., NL-3641 RK Mijdrecht (NL)
(72) Inventor: van Walraven, Jan, NL-3641 GP Mijdrecht (NL)
(74) Representative: Boelsma, Gerben Harm, Ir.
(86) International application number: NL9400304
(87) International publication number: WO9515456

(56) References cited:
- EP-A- 0 387 966
- EP-A- 0 387 967
- FR-A- 1 300 273

## Description

The invention relates to a pipe clip, comprising an annular clip body formed of a strip material, the ends of which are bent into flanges adapted to be pulled together by means of a clamping screw, a filling element being provided for selective insertion between the two flanges and provided with a laterally opening slot through which the shank of the clamping screw may pass.

The filling element is inserted between the flanges in those cases, where the pipe or tube surrounded by the pipe clip must be able to slide within the clip after the flanges have been pulled together.

When, however, a non-slidable fastening is desired, the filling element is omitted, so that the flanges can be pulled together completely.

Pipe clips of this type are known in various embodiments and are disclosed e.g. in DE-U-91 03 296 and DE-U-90 02 878. In the first case the filling ring is provided with a radial slit, which allows the filling ring to be laterally placed onto the shaft of the fastening screw and removed therefrom respectively. In the second case a small filling block is involved, which may be slid onto one of the flanges of the clip body and is provided with an open ended slot so as to laterally engage the shaft of the fastening screw.

It is an object of the invention to provide an improved pipe clip of this type allowing the filling element to be placed in an easier manner in case of a slidable fastening.

The improvement proposed by the invention is characterized in that the filling element is making part of at least one of the flanges or of a part to be placed thereon, in such a way that the element may be folded from a lateral, inactive position into an operative position between the two flanges, while said slot extends at right angles to the line about which the element is foldable.

The pipe clip according to the invention has the great advantage, that in all circumstances there is a filling element available so that one has not to rely anymore - as in the case with the well-known embodiments - on the availability of a separate part.

It is to be noted that FR-A-1.300.273 discloses a pipe clip with a clamping element that is integrally connected to one of the flanges by means of a flexible connecting portion, in such a way that the element may be moved from a lateral machine or premounting position towards an active or mounting position in which the element clamps the two flanges together.

In the simplest embodiment the filling element is integrally formed with the respective flange and constituted by an extension of said flange that extends from an edge of said flange outwardly, the flange thickness at said edge being reduced to form a hinge line, about which said extension may be turned inwardly.

In a practical embodiment which is in particular adapted for use with a pipe clip formed of metal, the filling element is formed as a lateral extension of an auxiliary piece of plastic that is adapted to be permanently mounted onto the flange and is provided with passage openings for the fastening screw, wherein the connecting or transition lines between said auxiliary piece and the lateral extension is functioning as a hinge line, where the thickness is reduced and about which the extension may be turned inwardly.

The invention will hereinafter be further explained with reference to the drawing, wherein two examples are shown.
Fig. 1 is a diagrammatic perspective view of a pipe clip formed of plastic, one of the flanges of which is provided with an integrally formed filling element according to the invention;
fig. 2 is a cross-sectional view of an auxiliary piece provided with an integrally formed filling element according to the present invention, adapted to be slided onto one of the flanges of a pipe clip;
fig. 3 is a plan view of the auxiliary piece shown in fig. 2 and
fig. 4 is a cross-sectional view of two flanges of a pipe clip, said flanges being pulled together, with an auxiliary piece according to fig. 2-3 being provided on one of these flanges and with the filling element turned into its operative position.

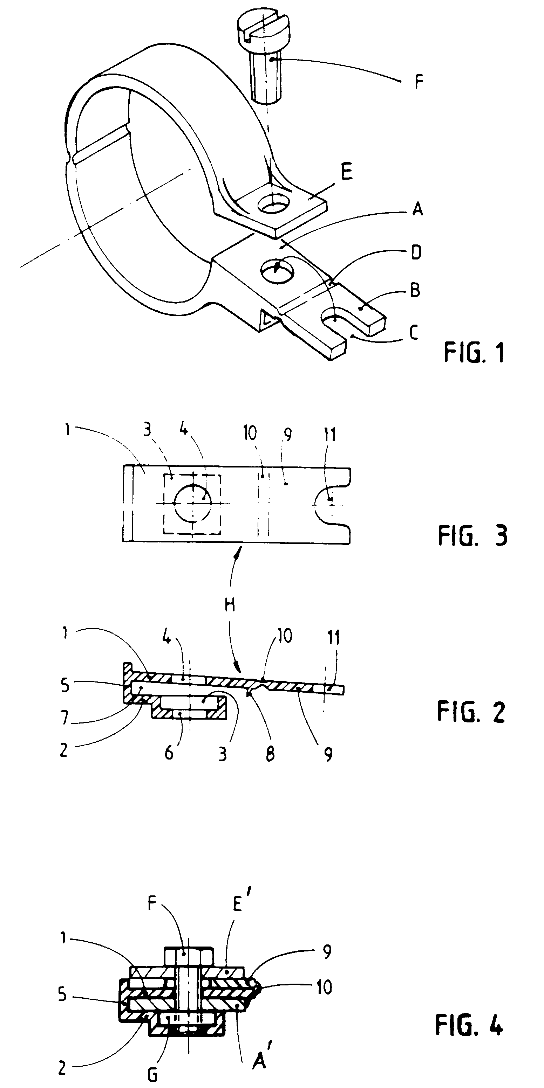

The pipe clip shown in fig. 1 is formed of plastics material and has one of its flanges A outwardly extended with a filling element B, that is provided with an outwardly opening slot C. The narrow transition area D between the flange A and the filling element B has a thickness which is reduced relative to the thickness of the clip body, due to which this area may function as a hinge, whereabout the filling element may be turned in the arrow direction, so that it becomes seated on the upper side of the flange A.

In the example shown the flange A is provided on its lower side with a seat for accommodating a nut (not shown) which fits with the clamping screw F and may e.g. slided either from aside or from the end of the flange A into said seat. When a non-slidable hold of the pipe within the clip body is desired, the filling element B is left in its inactive position in which it extends laterally beyond the flange A of the pipe clip; in this position the filling element simultaneously constitutes a clear indication that the clip in question provides for a non-slidable fastening.

When, however, or tube should be permitted to slide within the clip, the filling element B is turned inwardly so that it will be clamped as an (additional) filling element between the flanges of the pipe clip.

The example shown in figs. 2-4 relates to an auxiliary piece H in the form of a flat U-shaped clamping body, adapted to be slided from aside onto the flange of a pipe clip formed e.g. of metal. One leg 1 of this clamping body will become positioned between the two flanges of the pipe clip, whereas the second leg 2 will engage the outer side of the flange that carries the clamping body.

The "web" 5 of the U-shaped clamping body, that connects the two legs 1 and 2 extends beyond (above) the leg 1 to an extent which corres-ponds to the thickness of the web. The spacing between the legs 1 and 2, as measured at the web 5, corresponds to the thickness of the respective flange of the pipe clip.

In the untensioned state shown in fig. 2 the two legs 1 and 2 slightly converge into a direction turned away from the web 5. The flange of the pipe clip is captured within the space 7 between the legs 1 and 2 and becomes laterally locked in place between the web 5 and an abutment edge 8 extending from the leg 1, while the legs 1 and 2 are pressed onto the pipe clip flange.

Beyond the abutment edge 8 the leg 1 continues with an extension 9, which is connected to the leg 1 proper by means of a narrow and thin connecting portion 10. The extension 9 is provided with an outwardly opening slot 11 and may be turned in the arrow direction about the connecting portion 10 acting as a hinge, in such a way, that it becomes seated onto the upper side of the leg 1. The slot 11 will then become aligned with the opening 4 to pass the shaft of the clamping screw F therethrough.

In the example shown the second leg 2 is provided with a deepened seat 3, e.g. of a square cross-sectional shape, for a nut G that fits on the clamping screw F. The leg 1 is provided with an opening 4 that is aligned with the seat 3, while in the bottom of the seat 3 there is a smaller opening 6 through which the free end of the clamping screw may pass.

Fig. 4 shows the clip body in its operative position, with the extension 9 turned into the active position. In that case the extension 9 functions as a (additional) filling piece between the flanges X and Y of the pipe clip, which secures that the clip will loosely surround the pipe to be fastened, so that the pipe or tube is allowed to slide.

If the pipe or tube is to be clamped in place within the clip, the extension 9 is simply turned outwardly into the position shown in fig. 2. In that position the extension 9 simultaneously indicates that a pipe or tube is involved which is tightly clamped in place.

## Claims

1. Pipe clip, comprising an annular clip body formed of a strip material, the ends of which are bent into flanges (A, E; A', E') adapted to be pulled together by means of a clamping screw (F), a filling element (B; 9) being provided for selective insertion between the two flanges (A, E; A', E') and provided with a laterally opening slot (C; 11) through which the shank of the clamping screw (F) may pass, characterized in that the filling element (B; 9) is making part of at least one of the flanges (A) or of a part (H) to be placed thereon, in such a way that the element (B; 9) may be folded from a lateral, inactive position into an operative position between the two flanges (A, E; A', E'), while said slot (C; 11) extends at right angles to the line about which the element (B; 9) is foldable.

2. Pipe clip according to claim 1, characterized in that the filling element (B) is integrally formed with the respective flange (A) and constituted by an extension of said flange (A) that extends from an edge of said flange (A) outwardly, the flange thickness at said edge being reduced to form a hinge line (D), about which said extension (B) may be turned inwardly.

3. Pipe clip according to claim 1, characterized in that the filling element (9) is formed as a lateral extension of an auxiliary piece (H) of plastic that is adapted to be permanently mounted onto the flange (A') and is provided with passage openings (4, 6) for the fastening screw (F), wherein the connecting or transition line between said auxiliary piece (H) and the lateral extension (9) is functioning as a hinge line (10), where the thickness is reduced and about which the extension may be turned inwardly.

4. Pipe clip according to claim 3, characterized in that the auxiliary piece (H) is in the form of a flat U-shaped clamping body (H), one leg (1) of which will become positioned between the two flanges (A', E') of the pipe clip and is flat shaped and extended with said filling element (9).

5. Pipe clip according to claim 4, characterized in that the second leg (2), which will become positioned on the outer side of the respective clip flange (A'), is provided with a recess (8) for receiving a nut (G) cooperating with said clamping screw (F).

## Patentansprüche

1. Rohrschelle, mit einem aus einem Materialstreifen geformten ringförmigen Schellenkörper, dessen Enden zu Flanschen (A, E; A', E') gebogen sind und mittels einer Klemmschraube (F) zusammenziehbar sind, wobei ein Füllelement (B; 9) wahlweise zwischen den beiden Flanschen (A, E; A', E') einfügbar ist, welches Element einen seitlich offnenden Schlitz (C; 11) aufweist, durch den der Schacht der Klemmschraube (F) passieren kann, dadurch gekennzeichnet, dass das Füllelement (B; 9) mit mindestens einem der Flansche (A) oder einem auf letzterem sitzenden Teil (H) ein Ganzes bildet, in der Weise, dass das Element (B; 9) aus einer seitlichen, unwirksamen Lage in eine wirksame Lage zwischen den beiden Flanschen (A, E; A', E') umgelegt werden kann, wobei der Schlitz (C; 11) sich senkrecht zur Linie erstreckt, um die das Element (B; 9) umlegbar ist.

2. Rohrschelle nach Anspruch 1, dadurch gekennzeichnet, dass das Füllelement (B) mit dem betreffenden Flansch (A) aus einem Stück gebildet ist und von einer Verlängerung dieses Flansches (A) gebildet wird, welche Verlängerung sich von einer Kante des Flansches (8) nach aussen erstreckt, wobei die Stärke des Flansches längs dieser Kante reduziert ist, sodass eine Gelenklinie (D) gebildet ist, um die die Verlängerung (B) nach innen umgelegt werden kann.

3. Rohrschelle nach Anspruch 1, dadurch gekennzeichnet, dass das Füllelement (9) in Form einer seitlichen Verlängerung eines Hilfsstückes (H) aus Kunststoff ausgebildet ist, welches Hilfsstück für einen Dauersitz auf dem betreffenden Flansch (A') ausgelegt ist und mit Durchgängen (4, 6) für die Klemmschraube (F) versehen ist, wobei die Verbindungs- oder Übergangslinie zwischen dem Hilfsstück (H) und der seitlichen Verlängerung die Funktion einer Gelenklinie (10) hat, längs welcher Linie die Wandstärke reduziert ist und um die sich die Verlängerung nach innen umlegen lässt.

4. Rohrschelle nach Anspruch 3, dadurch gekennzeichnet, dass das Hilfsstück (H) die Gestalt eines flachen U-förmigen Klemmkörpers (H) hat, dessen eine Schenkel (1) zwischen den beiden Flanschen (A', E') der Rohrschelle liegt, flach ausgebildet ist und mit dem Füllelement (9) verlängert ist.

5. Rohrschelle nach Anspruch 4, dadurch gekennzeichnet, dass der zweite Schenkel (2), der sich an der Aussenseite des betreffenden Flansches (A') befindet, mit einer Aussparung (8) zum Aufnehmen einer mit der Klemmschraube (F) zusammenarbeitenden Mutter (G) versehen ist.

## Revendications

1. Collier pour tuyaux comprenant un corps de collier annulaire formé en une matière en bande dont les extrémités sont pliées pour former des brides (A, E ; A', E') pouvant être rapprochées au moyen d'une vis de serrage (F), un élément de remplissage (B ; 9) étant prévu pour être inséré sélectivement entre les deux brides (A, E ; A', E'), et comportant une fente (C ; 11) qui s'ouvre latéralement, et à travers laquelle peut passer la tige de la vis de serrage (F),
caractérisé en ce que l'élément de remplissage (B; 9) fait partie d'au moins l'une des brides (A) ou d'un élément (H) qui doit être placé sur celle-ci, de manière à ce que l'élément (B ; 9) puisse être amené par pliage d'une position latérale inactive vers une position de travail entre les deux brides (A, E ; A', E'), alors que la fente (C ; 11) s'étend à angle droit par rapport à la ligne autour de laquelle l'élément (B ; 9) peut être plié.

2. Collier pour tuyaux selon la revendication 1,
caractérisé en ce que l'élément de remplissage (B) est formé intégralement avec la bride respective (A) et constitué par un prolongement de la bride (A) qui s'étend vers l'extérieur à partir d'un bord de la bride (A), l'épaisseur de la bride audit bord étant réduite pour former une ligne d'articulation (D) autour de laquelle le prolongement (B) peut pivoter vers l'intérieur.

3. Collier pour tuyaux selon la revendication 1,
caractérisé en ce que l'élément de remplissage (9) est un prolongement latéral d'une pièce auxiliaire (H) en matière plastique apte à être montée en permanence sur la bride (A'), et présentant des ouvertures (4, 6) pour le passage de la vis de fixation (F), la ligne de connexion ou de transition entre la pièce auxiliaire (H) et le prolongement latéral (9) exerçant la fonction d'une ligne d'articulation (10) où l'épaisseur est réduite, et autour de laquelle le prolongement peut pivoter vers l'intérieur.

4. Collier pour tuyaux selon la revendication 3,
caractérisé en ce que la pièce auxiliaire (H) a la forme d'un corps de serrage (H) plat en U, dont un bras (1) se positionne entre les deux brides (A', E') du collier pour tuyaux, présente une forme plate, et est prolongé par l'élément de remplissage 9.

5. Collier pour tuyaux selon la revendication 4,
caractérisé en ce que le deuxième bras (2) qui se positionne sur la face extérieure de la bride respective (A') du collier présente un évidement (8) pour loger un écrou (G) qui coopère avec la vis de serrage (F).
